# EUROPÄISCHE PATENTSCHRIFT

(11) **EP 2 430 331 B1**
(45) Veröffentlichungstag und Bekanntmachung des Hinweises auf die Patenterteilung: **17.04.2013**
(21) Anmeldenummer: 10717141.5
(22) Anmeldetag: 03.05.2010
(51) Int. Cl.: F16H 25/24, F16D 23/12

(54) **ANBINDESTRUKTUR IN EINEM KUPPLUNGSBETÄTIGUNGSLAGER UND KUPPLUNGSBETÄTIGUNGSLAGER**
CONNECTING STRUCTURE IN A CLUTCH BEARING AND CLUTCH ACTUATING BEARING
STRUCTURE DE CONNECTION DANS UN BUTÉE DE DEBRAYAGE ET BUTÉE DE DEBRAYAGE

(30) Priorität: 12.05.2009 DE 102009020903
(43) Veröffentlichungstag der Anmeldung: 21.03.2012
(73) Patentinhaber: Schaeffler Technologies AG & Co. KG, 91074 Herzogenaurach (DE)
(72) Erfinder: WINKELMANN, Ludwig, 91056 Erlangen (DE)
(86) Internationale Anmeldenummer: PCT/EP2010/055976
(87) Internationale Veröffentlichungsnummer: WO 2010/130593

(56) Entgegenhaltungen:
- EP-A1- 1 669 639
- DE-A1-102007 011 038
- DE-U1- 20 318 234
- US-A- 2 521 607

## Beschreibung

### Gebiet der Erfindung

Die Erfindung betrifft eine Anbindestruktur in einem Kupplungsbetätigungslager: Die Anbindestruktur umfasst einen Lagerring, eine Stellstange, eine an dem Lagerring angebundene Mutter, die auf die Stellstange aufgeschraubt werder kann, sowie eine Sicherungskappe zur Drehsicherung der Mutter gegenüber der Stellstange, wobei die Sicherungskappe drehfest mit der Mutter verbunden ist.

Des Weiteren betrifft die Erfindung ein Kupplungsbetätigungslager mit einem Wälzlager, umfassend einen inneren Lagerring, einen äußeren Lagerring und einer Anzahl von zwischen den Lagerringen angeordneten Wälzkörpern, und mit einer Stellstange, wobei der innere Lagerring und damit das Wälzlager über die vorgenannte Anbindestruktur an der Stellstange befestigt ist.

### Hintergrund der Erfindung

Eine Anbindestruktur der eingangs genannten Art dient in einem Kupplungsbetätigungslager der Anbindung des Wälzlagers an eine bewegliche Stellstange. Die Stellstange ist beispielsweise axial verschiebbar in einer Getriebeeingangswelle geführt. Über eine axiale Verstellung der Stellstange wird das die Kupplung betätigende Wälzlager verschoben und damit eine Änderung eines Kupplungseingriffszustandes bewirkt.

Eine Anbindestruktur der eingangs genannten Art ist beispielsweise in der DE 10 2007 011 038 A1 offenbart. Die aufschraubbare Mutter dient der axialen Positionierung des Lagers gegenüber der Stellstange. Ein selbsttätiges Verdrehen der Mutter auf der Stellstange im Betrieb, beispielsweise durch Vibrationen oder Erschütterungen, führt zu einer unerwünschten Positionsänderung des Lagers, so dass gegebenenfalls eine korrekte Betätigung der Kupplung nicht mehr gewährleistet ist. Gemäß der DE 10 2007 022 038 A1 ist die Mutter drehsicher gegenüber der Stellstange befestigt sein, um in der gewünschten Position zu verbleiben. Zur Drehsicherung der Mutter gegenüber der Stellstange ist eine Sicherungskappe vorgesehen, die auf die Mutter aufgesteckt wird. Zur Ausbildung der Drehsicherung greift die aufgeschobene Sicherungskappe beispielsweise mit einem Sechskant-Einsteckabschnitt formschlüssig in eine stirnseitig in der Stellstange ausgebildete Sechskant-Einstecköffnung ein.

Nachteilig bei der zuvor beschriebenen Fixierung ist allerdings, dass sich die aufgeschobene Sicherungskappe auf der Mutter im laufenden Betrieb lockern kann. Es besteht die Möglichkeit, dass die Sicherungskappe von der Mutter abrutscht. Dadurch besteht erneut die Gefahr einer Positionsänderung des Lagers gegenüber der Stellstange in axialer Richtung. Die Mutter kann sich bei Erschütterungen, Vibrationen oder dergleichen verdrehen. Neben einer störenden Geräuschentwicklung kann insofern auch die Betriebssicherheit des Kupplungsbetätigungslagers nicht mehr ausreichend gewährleistet werden.

### Aufgabe der Erfindung

Es ist eine Aufgabe der Erfindung, eine Anbindestruktur der eingangs genannten Art anzugeben, welche eine bezüglich der Betriebssicherheit verbesserte Fixierung des Lagers auf der Stellstange gewährleistet.

Eine weitere Aufgabe der Erfindung ist es, ein Kupplungsbetätigungslager mit einer solchen Anbindestruktur anzugeben.

### Lösung der Aufgabe

Die erstgenannte Aufgabe der Erfindung wird erfindungsgemäß gelöst durch eine Anbindestruktur mit der Merkmalskombination gemäß Anspruch 1. Demnach weist die Anbindestruktur in einem Kupplungsbetätigungslager einen Lagerring, eine Stellstange und eine an einem Lagerring angebundene Mutter auf, die auf die Stellstange aufgeschraubt ist. Zur Drehsicherung der Mutter gegenüber der Stellstange ist eine Sicherungskappe vorgesehen, die drehfest mit der Mutter verbunden ist. Ein separates Fixierelement ist mit der Sicherungskappe verbunden, wobei das Fixierelement ein Mittel zur Axialabsicherung gegenüber der Stellstange aufweist.

Ausgehend von den an die Anbindestruktur gestellten Anforderungen geht die Erfindung in einem ersten Schritt davon aus, dass die Drehsicherung der Mutter auf der Stellstange mittels einer Sicherungskappe nicht betriebssicher genug ist. Dies liegt darin begründet, dass sich die Sicherungskappe bekannter Ausführung im Betrieb von der Mutter lösen kann. Für weitergehende Befestigungen steht jedoch aufgrund herstellerspezifischer Auflagen kein zusätzlicher Bauraum zur Verfügung. Insbesondere ist dies der Fall bei Doppelkupplungsgetrieben.

In einem zweiten Schritt erkennt die Erfindung, dass die Betriebssicherheit des Kupplungsbetätigungslagers bei Verwendung einer Sicherungskappe zur Drehsicherung der Mutter überraschenderweise einfach dadurch erhöht werden kann, dass ein Verschieben der Kappe in axialer Richtung verhindert wird. Das Lager wird durch das die Sicherungskappe axial haltende Fixierelement sicher vor einem Versatz gegenüber der Stellstange bewahrt. Die Sicherungskappe kann sich nicht von der Mutter lösen, die hierdurch wiederum drehfest gegenüber der Stellstange fixiert ist. Da ein entsprechendes Fixierelement lediglich zur Axialsicherung dienen muss, kann es klein dimensioniert sein, so dass der zur Verfügung stehende Bauraum gering bemessen sein kann. Insbesondere kann der noch zur Verfügung stehende Bauraum innerhalb eines Kupplungsbetätigungslagers ausgenützt werden. Zusätzlich bietet die Verwendung eines einfachen, separaten Fixierelementes den Vorteil eines geringen Montageaufwands und niedriger Produktionskosten.

Insgesamt bietet also die Verwendung eines separaten Fixierelementes eine kostengünstige und betriebssichere Möglichkeit, das zur Betätigung der Kupplung vorgesehene Lager sicher axial an einer Stellstange zu positionieren, und dabei die Vorgaben für den Bauraum einzuhalten. Dadurch, dass die Sicherungskappe zusätzlich axial fixiert ist, verbleibt die Mutter auch während des Betriebs sicher und vor allem drehfest gegenüber der Stellstange gehalten.

Üblicherweise ist die Stellstange als eine Zugstange ausgebildet, so dass durch Zug an der Stellstange das Lager axial zu einem Ausrücken der Kupplung verschoben wird. Die Stellstange kann sich insbesondere entgegen der Zugrichtung verjüngen. Der Lagerring ist beispielsweise aus einem Metall oder einer Metalllegierung gefertigt und als ein Schmiederohling hergestellt. Die Anbindung des Lagerrings an der Mutter erfolgt bevorzugt über eine entsprechend ausgebildete Tellerfeder. Dies erlaubt bei axial fester Positionierung eine selbsttätige Zentrierung des Lagerrings auf der Mutter. Die Mutter kann zur Anbindung des Lagerrings zusätzlich mit einer radial hervorkragenden Stützschultereinrichtung ausgebildet sein, an der sich die Feder abstützt. Der Lagerring weist hierzu insbesondere einen geeigneten Tragringabschnitt auf, der mittels der Tellerfeder an der Stützschultereinrichtung gehalten ist. Durch die axiale Verlagerung es möglich ist, über die Anbindestruktur eine Axialkraft in den Tragringabschnitt einzuleiten und hierdurch das gesamte Lager in axialer Richtung zur Betätigung der Kupplung zu verschieben.

Die Sicherungskappe wird beispielsweise drehfest der Mutter aufgeschoben. Insbesondere wird die Sicherungskappe gegen eine vorhandene Stützschultereinrichtung von der der Tellerfeder abgewandten Seite aufgeschoben. Die Sicherungskappe kann als ein Fließpressteil gefertigt sein, welches in der Herstellung nur geringe Kosten verursacht. Grundsätzlich kann die Sicherungskappe kann aus Metall oder aus Kunststoff gefertigt sein.

Zur drehfesten Anbindung der Sicherungskappe auf der Mutter sind verschiedene Möglichkeiten vorstellbar. Die Erfindung ist hierbei nicht auf eine spezifische Ausgestaltung eingeschränkt. Die Mutter kann insbesondere, weil leicht herstellbar oder ohnehin zu einem einfachen Aufschrauben mit verfügbarem Werkzeug notwendig, mit einem Außenmehrkant ausgebildet sein, auf den die Sicherungskappe insbesondere mit einem Innenmehrkant aufgeschoben werden kann. Vorteilhafterweise ist hierbei die Kantenanzahl des Innenmehrkants ein ganzzahliges Vielfaches des Außenmehrkants. Hierdurch kann bei einfacher Montage eine sichere und drehfeste Verbindung der beiden Komponenten gewährleistet werden. Der besondere Vorteil in der unterschiedlichen Anzahl der Kanten des Außenmehrkants der Mutter und des Innenmehrkants der Sicherungskappe liegt darin, dass beide Bauteile in einer erhöhten Anzahl von Winkelpositionen zusammengesteckt werden können, so dass sich das Aufschieben der Sicherungskappe bei auf der Stellstange montierter Mutter vereinfacht. Bei Verwendung einer Sicherungskappe mit einem Innenzwölfkant wird im Falle eines Außensechskants der Mutter beispielsweise ein Teilungsfehler < 9 % bei einer Gewindesteigung der Stellstange von 1 mm erreicht.

Das Fixierelement ist einerseits mit der Sicherungskappe fest verbunden. Andererseits stützt sich das Fixierelement mit einem geeigneten Mittel insbesondere an der Stellstange axial ab. Eine derartige Ausgestaltung benötigt einen geringen Bauraum, da das Fixierelement ohne großen Konstruktionsaufwand benachbarte Teile verbindet. Zudem kann hierdurch eine einfache Montage erzielt werden. Das Fixierelement kann insbesondere der aufgeschobenen Kappe nachträglich aufgesetzt werden und dann diese an der durchgehenden Stellstange abstützen. Dabei kann das Fixierelement die Montage weiter erleichtern, wenn es beispielsweise derart ausgeführt ist, dass es zum Aufsetzen entlang der Stellstange geführt werden kann. Weiter kann das Fixierelement bei einer Anbindung der Kappe an der Stange zur Axialsicherung herangezogen werden, ohne dass konstruktive Änderungen der Mutter oder der Sicherungskappe erforderlich wären. In einem Kupplungsbetätigungslager kann vorhandener Restbauraum ausgenutzt werden. Geeignete Mittel zur Axialsicherung verhindern insofern, dass sich das Fixierelement gegenüber der Stellstange axial verschieben kann. Die Abstützung an der Stellstange kann grundsätzlich über bekannte mechanische Kopplungen erfolgen. Insofern können die Abstützmittel einen Form-, Kraft- oder Materialschluss beinhalten.

Zum Aufschrauben der Mutter weist die Stellstange ein Außengewinde auf. In einer diesbezüglich vorteilhaften Ausgestaltung greift zur Axialsicherung der Sicherungskappe wenigstens eine am Fixierelement angeordnete federelastische Rastnase formschlüssig in die gegebenen Flanken des Gewindes ein. Die Gewindeflanken bilden eine gute Abstützfläche für geeignet ausgebildete Rastnasen, so dass ein axiales Abrutschen der Sicherungskappe von der Mutter während des Betriebs verhindert ist. Dadurch, dass das Außengewinde bereits auf der Stellstange vorhanden ist, ist kein zusätzlicher Prozessschritt nötig und die Axialsicherung der Sicherungskappe kann ohne Umgestaltung der Stellstange verwirklicht werden.

Zur weiteren Sicherung umfasst das Fixierelement bevorzugt wenigstens eine federelastische Sperrnase, die sich zur Axialsicherung schräg entgegen einer Aufsteckrichtung der Sicherungskappe reibschlüssig an der Stellstange abstützt. Die Sicherungskappe ist in dieser Ausgestaltung in Aufsteckrichtung auf der Mutter aufgebracht. Ein Abrutschen während des Betriebs entgegen der Aufsteckrichtung führt aufgrund der Schrägstellung der Sperrnase zu einem Aufkanten und somit zu einer axialen Blockade gegenüber der Stellstange. Durch diese Maßnahme kann insbesondere die Axialsicherung zusätzlich zum Formschluss durch die Rastnasen verstärkt werden.

In einer besonders vorteilhaften Ausgestaltung der Erfindung weist die Sicherungskappe eine radial ausgerichtete Stirnflanschstruktur auf, die von der Stellstange drehfest durchsetzt ist. Die Stirnflanschstruktur kann bevorzugt der unmittelbaren Drehsicherung der Mutter gegenüber der Stellstange dienen und zur Momentübertragung auf ein angeflachtes Ende der Stellstange beispielsweise mit einem Zweikantloch ausgebildet sein. Die Stirnflanschstruktur kann insbesondere einstückig mit der Sicherungskappe gefertigt sein, so dass keine zusätzlichen Arbeitsschritte bei der Montage nötig sind. Über die Stirnflanschstruktur kann die Sicherungskappe zur Montage einfach und bereits ausgerichtet auf der Stellstange geführt wird.

Um ein leichtes Anbringen des Fixierelementes zu ermöglichen, umfasst die Stirnflanschstruktur zweckmäßigerweise eine Aufnahmeöffnung, in der das Fixierelement mit wenigstens einer axial ausgerichteten Rastkralle verrastet ist. Durch eine Anzahl von Rastkrallen kann das Fixierelement in besonders einfacher Weise auf die Sicherungskappe aufgesteckt werden, wodurch eine einfache Montage ermöglicht. Zusätzlich bietet eine Rastverbindung einen sicheren Halt des Fixierelements an der Sicherungskappe.

Vorteilhafterweise ist das Fixierelement auf die Stirnflanschstruktur aufgesetzt und von der Stellstange durchsetzt. Das Fixierelement kann beispielsweise eine Mittenöffnung aufweisen, in der die Stellstange geführt ist. Eine solche Ausführung ermöglicht es, das Fixierelement nach der Aufbringung auf die Stirnflanschstruktur im Sinne einer Vormontage direkt zusammen mit der Sicherungskappe auf der Stellstange aufzubringen. Der Montageaufwand verringert sich hierdurch weiter.

Um die Sicherungskappe weiter zu den bisher genannten Möglichkeiten gegenüber einem Abziehen von der Mutter zu sichern, ist bevorzugt ein Sicherungselement zur axialen Abziehsicherung des Fixierelements vorgesehen, welches das Fixierelement in axialer Richtung an der Sicherungskappe sichert. Hierdurch wird nun das Fixierelement selbst gegen ein unerwünschtes Abwandern von der Sicherungskappe gesichert. Durch die zusätzliche Verwendung einer derartigen Sicherung kann kundenspezifisch die Betriebssicherheit des Kupplungsbetätigungslagers weiter verbessert werden.

Das Sicherungselement ist vorteilhafterweise als eine Stützplatte ausgebildet, die wenigstens eine sich in axialer Richtung erstreckende Fixiernase aufweist, wobei die Fixiernase in der Aufnahmeöffnung die Rastkralle des Fixierelements radial abstützt. Durch die Anordnung der Fixiernasen an der Stützplatte ist eine einfache Montage über die Positionierung der Stützplatte möglich. Die Fixiernasen nutzen dabei den zur Ausgestaltung einer Rastverbindung mittels der Rastnasen ohnehin notwendigen Bauraum aus und hintergreifen gewissermaßen die eingerasteten Rastkrallen in radialer Richtung. Die Rastkrallen stützen sich über Federkraft in der Aufnahmeöffnung ab und werden von den Fixiemasen hinterlegt. Hierdurch wird einer Federbewegung der Rastkrallen entgegengewirkt, so dass die Rastkrallen blockiert sind und in ihrer Position gehalten werden. Das Fixierelement wird auch bei verbogenen Rastkrallen oder bei nachlassender Vorspannung der Rastkrallen sicher an der Sicherungskappe gehalten.

Zweckmäßigerweise ist die Stützplatte des Sicherungselements von der Stellstange durchsetzt. Insbesondere kann die Stützplatte ein Zweikantloch aufweisen, welches beispielsweise die gleichen Dimensionen aufweist, wie das der Stirnflanschstruktur der Sicherungskappe. Diese Konstruktion bzw. Ausbildung der Stützplatte ermöglicht es, die Sicherungskappe und die Stützplatte gemeinsam im Sinne einer Vormontageeinheit auf die Stellstange bzw. auf die Mutter aufzubringen, so dass der logistische Aufwand gering gehalten werden kann. Die Positionierung erfordert keinen zusätzlichen Montageschritt und die Stützplatte kann ohne großen Aufwand angebracht werden.

Um die Stützplatte den geforderten Ansprüchen entsprechend an der Sicherungskappe anbringen zu können, weist die Stützplatte in einer besonders vorteilhaften Ausgestaltung der Erfindung eine in einen Innenmehrkant der Sicherungskappe einsetzbare Außenstruktur auf. So kann sie passgenau direkt in die Sicherungskappe eingebracht werden und ist in dieser sicher befestigt.

Grundsätzlich kann das Sicherungselement aus unterschiedlichen Materialien gefertigt sein. Bevorzugt besteht das Sicherungselement aus einem Kunststoff. Durch die Verwendung eines Kunststoffes lassen sich die technischen Eigenschaften, wie beispielsweise die Verformbarkeit, die Elastizität, die Temperaturbeständigkeit und die chemische Beständigkeit, durch die Wahl des Kunststoffes oder auch durch das das Herstellungsverfahren, zum Beispiel durch Spritzgießen variieren und beeinflussen. Beim Spritzgießen lassen sich wirtschaftlich direkt verwendbare Formteile in großer Stückzahl herstellen, was eine kostengünstige und einfache Produktionsmöglichkeit bietet.

In einer weiteren vorteilhaften Ausgestaltung der Erfindung ist an der oder jeder Rastkralle des Fixierelementes wenigstens eine Stütznase radial in die Aufnahmeöffnung ausgestellt. Diese Möglichkeit stellt eine Alternative zum als Stützplatte mit Fixiernasen ausgebildeten Sicherungselement dar. Die Stütznasen verhindern nach dem Verrasten der Rastnasen in der Sicherungskappe deren erneutes Ausrasten. Sie werden hierzu während der Montage mittels eines Werkzeuges aufgeweitet. Durch die angeformten Stütznasen ist kein zusätzliches Sicherungselement erforderlich. Diese Tatsache senkt wiederum die Produktionskosten und den logistischen Aufwand bei der Montage.

Alternativ zu den Stütznasen ist zweckmäßigerweise an der oder jeder Rastkralle wenigstens eine Stützzunge radial in die Aufnahmeöffnung ausgestellt. Wie bei den Stütznasen ermöglichen auch die Stützzungen eine zusätzliche Fixierung der Sicherungskappe an der Mutter. Die Stützzungen sind insbesondere durch ein Stanzschneiden durchgestellt und werden nach dem Verrasten der Rastnasen in der Sicherungskappe in die Endposition aufgebogen. Auch ist eine Ausgestaltung der Stützzungen als Federzungen vorstellbar, die nach der Montage selbsttätig in die gewünschte Sperrposition ausfedern.

In einer weiteren vorteilhaften Ausgestaltung ist im Bereich der Stirnflanschstruktur der Sicherungskappe das Fixierelement durch eine Materialanprägung axial fixiert. Ein Bund der Sicherungskappe ist hierzu insbesondere axial verlängert, so dass nach der Montage mit einem geeigneten Werkzeug Material des Bundes radial zur Mitte hin über das aufgelegte Fixierelement verschoben werden kann. Auch in diesem Fall ist kein zusätzliches Sicherungselement nötig, um das Fixierelement an der Sicherungskappe zu fixieren und es kann eine prozesssichere Montage gewährleistet werden.

Alternativ zur Materialanprägung ist das Fixierelement bevorzugt durch einen umgebördelten Rand an der Sicherungskappe axial fixiert. Der insbesondere zylindrische Rand weist hierzu bevorzugt eine verringerte Wanddicke auf und kann insofern nach der Montage mittels eines Werkzeuges leicht in die gewünschte Position umgebördelt werden. Hierdurch ergibt sich eine weitere Möglichkeit für einen sicheren Halt des Fixierelementes an der Sicherungskappe, die kein zusätzliches Sicherungselement benötigt.

Weiterhin kann die Sicherungskappe umlaufende oder partiell angeformte Nocken für die Demontage aufweisen. Mit Hilfe der Nocken kann bei einem Abzug der Sicherungskappe der Fixierwiderstand der Sperr- und Rastnasen leichter überwunden werden.

Um eine stabile Konstruktion der Anbindestruktur an der Stellstange zu erhalten, besteht die Sicherungskappe insbesondere aus einem Metall. Metalle haben einen hohen Schmelzpunkt und sind korrosionsbeständig, so dass sie sich für die Verwendung bei Temperaturen, wie sie im Betrieb eines Kupplungsbetätigungslagers herrschen, hervorragend eignen. Das Fixierelement kann partiell aus Kunststoff aus einem Kunststoff und aus einem Metall oder einer Metalllegierung gefertigt sein. Insbesondere die Mittel zur axialen Abstützung sind bevorzugt aus Metall bzw. einer Metalllegierung gefertigt.

Weiterhin wird die zweitgenannte Aufgabe erfindungsgemäß durch ein Kupplungsbetätigungslager mit der Merkmalskombination gemäß Anspruch 18 gelöst.

Demnach ist ein Kupplungsbetätigungslager mit einem Wälzlager vorgesehen, umfassend einen inneren Lagerring und einen äußeren Lagerring, wobei zwischen den Lagerringen eine Anzahl von Wälzkörpern angeordnet ist. Weiter ist das Wälzlager mittels des inneren Lagerrings an einer Stellstange mittels der vorgenannten Anbindestruktur befestigt.

Dabei können die für die Anbindungsstruktur genannten Vorteile sinngemäß auf das Kupplungsbetätigungslager übertragen werden.

Das Kupplungsbetätigungslager kann entweder als ein Einrücklager oder als ein Ausrücklager und insbesondere für den Einsatz in einem Doppelkupplungsgetriebe ausgebildet sein. Ein Doppelkupplungsgetriebe ist ein automatisiertes Schaltgetriebe, das mittels zweier Teilgetriebe einen vollautomatischen Gangwechsel ermöglicht. Die Getriebesteuerung wählt die Gänge selbsttätig im Rahmen der zugelassenen Drehzahlbereiche. Die Übertragung des Drehmomentes erfolgt über eine von zwei Kupplungen, die zwei Teilgetriebe mit dem Antrieb verbinden. Dieses Prinzip ermöglicht einen Gangwechsel ohne Zugkraftunterbrechung, indem gleichzeitig eine Kupplung schließt, während die andere öffnet.

Die Stellstange, die insbesondere als Zugstange ausgebildet ist, kann in eine Getriebewelle eingesetzt und in dieser axial verlagerbar sein. Die beiden Lagerringe sind im Kupplungsbetätigungslager axial verschiebbar. Der innere Lagerring des Kupplungsbetätigungslagers ist beispielsweise durch eine Tellerfeder an der Mutter befestigt und damit axial an der Stellstange gesichert. Im Betrieb des Kupplungsbetätigungslagers wird das Wälzlager über die Stellstange axial verschoben und dadurch eine Kupplung betätigt.

Das Wälzlager kann insbesondere als Kugeln ausgebildete Wälzkörper umfassen. Die Wälzkörper können mit einem Käfig in Position gehalten sein. Auch kann ein käfigloses Lager vorgesehen sein. Teile des Wälzlagers können durch das Kupplungsbetätigungslager selbst ausgebildet sein.

### Kurze Beschreibung der Zeichnung

Im Folgenden werden Ausführungsbeispiele der Erfindung anhand einer Zeichnung naher erläutert. Dabei zeigen
- Fig. 1: einen Anschnitt durch ein Kupplungsbetätigungslager mit einer Anbindestruktur, die eine Stützplatte und ein durch eine Materialanprägung gesichertes Fixierelement aufweist,
- Fig. 2: einen Anschnitt durch ein Kupplungsbetätigungslager mit einer Anbindestruktur, die eine Stützplatte und ein durch Umbördelung gesicherten Fixierelement aufweist,
- Fig. 3: ein Fixierelement mit Stütznasen,
- Fig. 4: ein Fixierelement mit Stützzungen, und
- Fig. 5: in zwei Explosionsdarstellungen eine Mutter, eine Sicherungskappe und ein Fixierelement vor der Montage.

### Ausführliche Beschreibung der Zeichnung

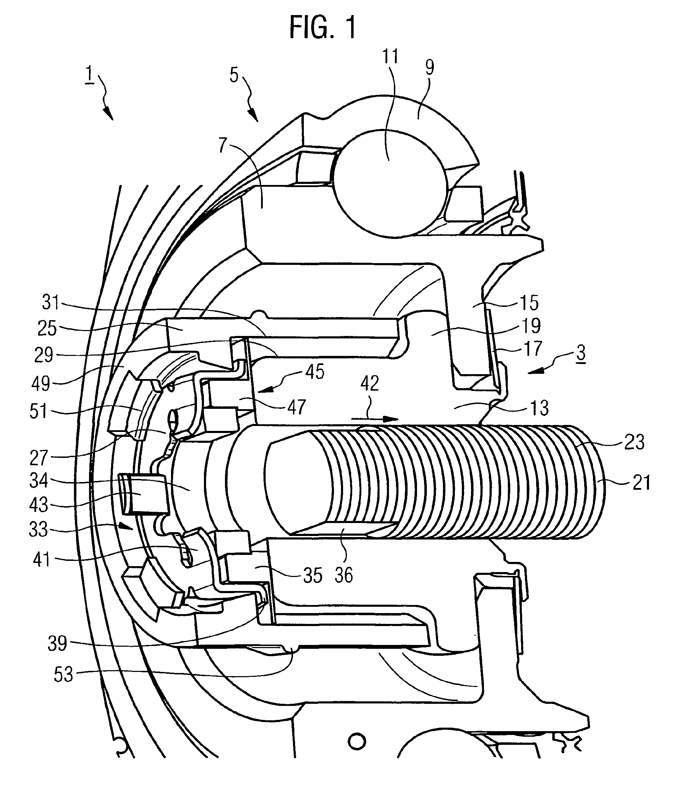

Fig. 1 zeigt einen Anschnitt durch ein Kupplungsbetätigungslager 1 mit einer Anbindestruktur 3. Dabei umfasst das Kupplungsbetätigungslager 1 ein Wälzlager 5 mit einem inneren Lagerring 7 und einem äußeren Lagerring 9. Der äußere Lagerring 9 ist lediglich schematisiert dargestellt. Zwischen dem inneren Lagerring 7 und dem äußeren Lagerring 9 sind eine Anzahl von Wälzkörpern 11 angeordnet. Die Wälzkörper 11 sind als Kugeln ausgebildet. Das Wälzlager 5 mit den beiden Lagerringen 7, 9 ist im Kupplungsbetätigungslager 1 axial verschiebbar.

Das Wälzlager 5 ist über den inneren Lagerring 7 an der Mutter 13 der Anbindestruktur 3 befestigt. Der innere Lagerring 7 ist mit einem inneren Tragringabschnitt 15 ausgebildet. Dieser ist über eine Tellerfeder 17 gegen eine Stützschultereinrichtung 19 der Mutter 13 gespannt. Die Mutter 13 ist auf dem Außengewinde 21 der Stellstange 23 aufgeschraubt. Die Stellstange 23, die als eine Zugstange ausgebildet ist, ist in eine in Fig. 1 nicht explizit gezeigte Getriebewelle eingesetzt und in dieser axial verlagerbar.

Auf die Mutter 13 ist eine Sicherungskappe 25 aufgeschoben. Die Sicherungskappe 25 ist über ein Fixierelement 27 an der Mutter 13 befestigt. Die Mutter 13 ist zum Aufschrauben mit einem Außensechskant 29 versehen. Die Sicherungskappe 25 ist mit einem Innenzwölfkant 31 ausgebildet, der nach der axialen Positionierung der Mutter 13 und damit des Wälzlagers 5 auf der Stellstange 23 auf den Außensechskant 29 der Mutter 13 aufgeschoben ist. Die Sicherungskappe 25 ist somit drehfest auf der Mutter 13 angeordnet. Sowohl die Mutter 13 als auch die Sicherungskappe 25 sind als Fließpressteile hergestellt.

Die Sicherungskappe 25 weist weiter eine Stirnflanschstruktur 33 mit einem Zweikantloch 34 auf. In das Zweikantloch 34 der Stirnflanschstruktur 33 greift nach erfolgter Montage drehfest ein abgeflachtes Ende 36 der Stellstange 23 ein. Damit ist die Sicherungskappe 25 und dadurch die Mutter 13 drehfest gegenüber der Stellstange 23 gehalten. In den Aufnahmeöffnungen 35 der Stirnflanschstruktur 33 ist das Fixierelement 27 über angeformte, axial verlaufende Rastkrallen 39 verrastet.

Zusätzlich weist das Fixierelement 27 angeformte federelastische Sperrnasen 41 auf, welche unter radialer Vorspannung reibschlüssig als axiale Abziehsicherung der Sicherungskappe 25 von der Mutter 13 wirken, wenn letztere nach der Montage auf der Stellstange 23 positioniert sind. Die Sperrnasen 41 stützen sich schräg entgegen der Aufsteckrichtung 42 reibschlüssig an der Stellstange 23 ab. Bei einem Abrutschen der Sicherungskappe 25 entgegen der Aufsteckrichtung 42 kanten die Sperrnasen 41 auf und blockieren hierdurch einen weiteren axialen Versatz. Zur zusätzlichen Sicherung gegen ein Abziehen der Sicherungskappe 25 von der Mutter 13 weist das Fixierelement 27 angeformte federelastische Rastnasen 43 auf, die in die Flanken des Außengewindes 21 im abgeflachten Ende 36 der Stellstange 23 eingreifen.

In die Sicherungskappe 25 ist eine aus Kunststoff gefertigte Stützplatte 45 mit einem Zweikantloch kraftschlüssig eingepresst. Die Stützplatte 45 erstreckt sich radial nach außen und ist dort mit einer Anzahl von Fixiernasen 47 versehen, welche in den Freiräumen der Aufnahmeöffnungen 35 die Rastkrallen 39 radial innen hinterlegen. Hierdurch wird ein Ausrasten der Rastkrallen 39 nach der Montage der Sicherungskappe 25 auf der Stellstange 23 bzw. während des Betriebs verhindert. Eine Bewegung der Rastkrallen 39 ist blockiert.

Die Sicherungskappe 25 weist weiter einen axial verlängerten Rand 49 im Bereich der Stirnflanschstruktur 33 auf. Der Rand 49 zeigt zur axialen Fixierung des Fixierelements 37 eine Materialanprägung 51, wodurch das Fixierelement 37 fest an der Stirnflanschstruktur 33 der Sicherungskappe 25 gehalten ist. Die Materialanprägung 51 ist nach der Montage des Fixierelementes 37 durch spezielle Werkzeuge eingebracht.

Des Weiteren weist die Sicherungskappe 25 Nocken 53 auf, die umlaufend an diese angeformt sind. Durch Angriff an den Nocken 53 kann bei der Demontage der Sicherungskappe 25 der Fixierwiderstand der Sperrnasen 41 und der Rastnasen 43 überwunden werden.

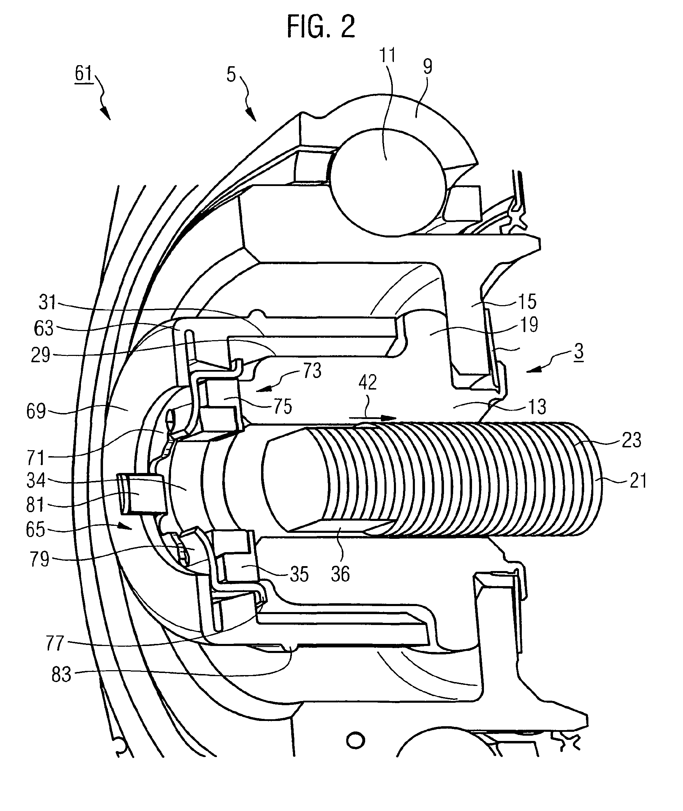

Fig. 2 zeigt wiederum in einem Anschnitt ein Kupplungsbetätigungslager 61 mit einer Anbindestruktur 3. Die Anbindestruktur 3 entspricht im Aufbau der gezeigten Anbindestruktur 3 aus Fig. 1. Die Ausführungen zu Fig. 1 gelten somit sinngemäß für Fig. 2.

Die Sicherungskappe 63 in Fig. 2 unterscheidet sich gegenüber Fig. 1 im Wesentlichen durch die Ausbildung der Stirnflanschstruktur 65. Diese weist gemäß Fig. 2 einen zylindrischen Rand 69 mit verringerter Wanddicke auf, der an die Sicherungskappe 63 angeformt ist. Der zylindrische Rand 69 ist nach der Montage eines Fixierelementes 71 mittels eines Werkzeuges in die gewünschte Position umgebördelt. Hierdurch ergibt sich alternativ zur Materialanprägung 51 in Fig. 1 eine weitere Möglichkeit für einen sicheren Halt des Fixierelementes 71 an der Sicherungskappe 63, die kein zusätzliches Sicherungselement benötigt.

In die Sicherungskappe 63 ist eine aus Kunststoff gefertigte Stützplatte 73 mit einem Zweikantloch formschlüssig eingefügt. Die Stützplatte 73 erstreckt sich in diesem Fall radial nach innen und ist ebenfalls mit Fixiernasen 75 zur Stabilisierung der Rastkrallen 77 versehen. Die Sicherungskappe 63 weist zusätzlich zur leichteren Überwindung des Fixierwiderstandes der Sperrnasen 79 und Rastnasen 81 des Fixierelements 71 bei der Demontage partiell angeformte Nocken 83 auf.

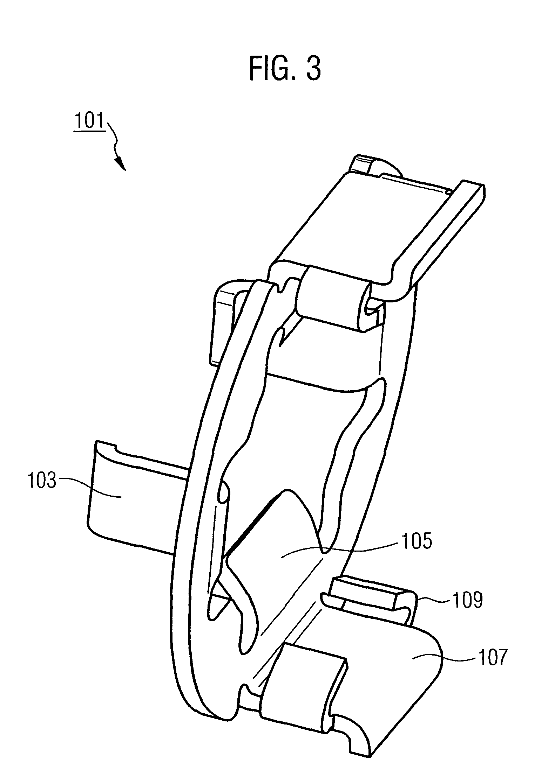

In Fig. 3 ist ein weiteres Fixierelement 101 gezeigt. Das Fixierelement 101 dient zur axialen Sicherung einer Sicherungskappe an einer Mutter, wie in den Figuren 1 und 2 gezeigt. Das Fixierelement 101 weist verschiedene Befestigungsmittel zur Axialsicherung an der Sicherungskappe auf.

Zur Axialsicherung gegenüber einer Stellstange sind federelastische Rastnasen 103 angeformt, die in die Flanken des Außengewindes der Stellstange eingreifen können. Weiterhin ist das Fixierelement 101 mit angeformten federelastischen Sperrnasen 105 ausgebildet, welche unter radialer Vorspannung reibschlüssig als axiale Abziehsicherung der Sicherungskappe von der Mutter wirken. In einer Stirnflanschstruktur der Sicherungskappe kann das Fixierelement 101 über angeformte, axial verlaufende Rastkrallen 107 verrastet werden. Die Rastkrallen 107 wirken radial nach außen.

Die Rastkrallen 107 haben angeformte Stütznasen 109, die das Fixierelement 101 an der Sicherungskappe fixieren und verhindern, dass sich die Rastkrallen 107 nach der Montage verformen. Die Stütznasen 109 können mittels eines Werkzeuges entsprechend aufgeweitet werden und so dem sich ihnen bietenden Platz entsprechend verformt werden. Die Stütznasen 109 verhindern insbesondere ein Ausrasten der Rastkrallen 107 radial nach innen.

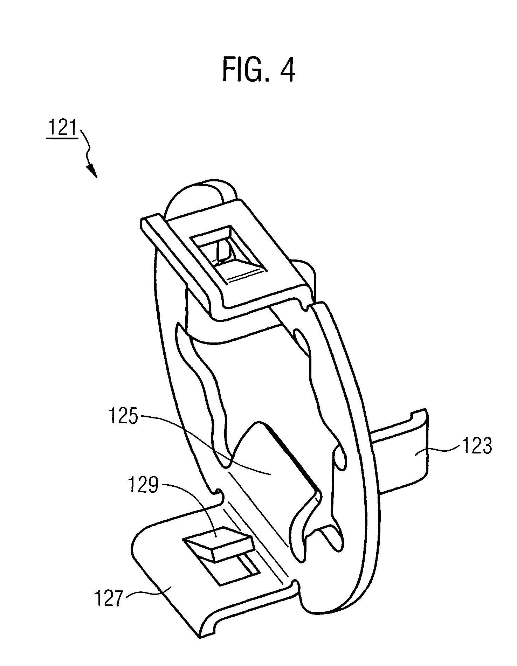

Fig. 4 zeigt eine weitere Ausführungsform eines Fixierelementes 121. Das Fixierelement entspricht im Wesentlichen dem Fixierelement 101 aus Fig. 3, sodass die Ausführungen zu Fig. 3 sinngemäß übernommen werden können.

Auch dem Fixierelement 121 sind federelastische Rastnasen 123 angeformt, die in die Flanken des Außengewindes einer Stellstange eingreifen können. Des Weiteren weist das Fixierelement 121 angeformte federelastische Sperrnasen 125 auf, die gegen die Stellstange unter radialer Vorspannung nach innen reibschlüssig als Abziehsicherung der Sicherungskappe von der Mutter wirken.

Im Unterschied zu Fig. 4 weisen die Rastkrallen 127, die zur Verrastung an das Fixierelement 121 angeformt sind, Stützzungen 129 auf. Die Stützzungen 129 sind durch Stanzschneiden aus den Rastkrallen 127 durchgestellt und verhindern ein Ausrasten der Rastnasen 123. Nach der Anbringung an der Sicherungskappe werden die Stützzungen 129 mittels eines Werkzeuges in die Endlage gebogen.

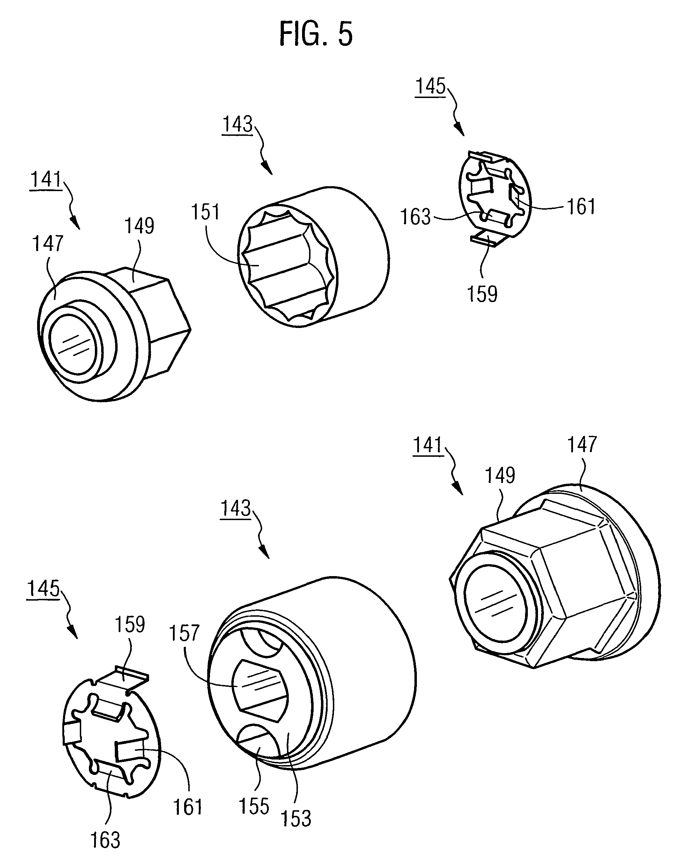

In Fig. 5 ist in zwei Explosionsdarstellungen eine Mutter 141, eine Sicherungskappe 143 und ein Fixierelement 145 aus zwei unterschiedlichen Perspektiven dargestellt.

Die Mutter 141 ist mit einer Stützschultereinrichtung 147 ausgebildet, die im Einbauzustand eine hier nicht gezeigte Tellerfeder hält. Die Mutter 141 kann auf eine hier nicht explizit gezeigte Stellstange aufgeschraubt werden. Die Mutter 141 weist einen Außensechskant 149 auf, auf den der Innenzwölfkant 151 der Sicherungskappe 143 aufgeschoben wird.

Die Sicherungskappe 143 ist mit einer Stirnflanschstruktur 153 versehen, die zwei Aufnahmeöffnungen 155 und ein Zweikantloch 157 aufweist. In dem Zweikantloch 157 kann ein abgeflachtes Ende einer Stellstange drehfest positioniert werden. In den Aufnahmeöffnungen 155 wird das Fixierelement 145 mittels seiner Rastkrallen 159 verrastet. Weiterhin sind federelastische Rastnasen 161 an das Fixierelement 145 angeformt, die in die Flanken des Außengewindes der Stellstange eingreifen können. Die angeformten federelastischen Sperrnasen 163 sind derart ausgebildet, dass sie unter radialer Vorspannung reibschlüssig als axiale Abziehsicherung der Sicherungskappe von der Mutter wirken.

### Liste der Bezugszahlen

- 1: Kupplungsbetätigungslager
- 3: Anbindestruktur
- 5: Wälzlager
- 7: innerer Lagerring
- 9: äußerer Lagerring
- 11: Wälzkörper
- 13: Mutter
- 15: Tragringabschnitt
- 17: Tellerfeder
- 19: Stützschultereinrichtung
- 21: Außengewinde
- 23: Stellstange
- 25: Sicherungskappe
- 27: Fixierelement
- 29: Außensechskant
- 31: Innenzwölfkant
- 33: Stirnflanschstruktur
- 34: Zweikantloch
- 35: Aufnahmeöffnung
- 36: abgeflachtes Ende
- 39: Rastkralle
- 41: Sperrnase
- 42: Aufsteckrichtung
- 43: Rastnase
- 45: Stützplatte
- 47: Fixiernase
- 49: angeprägter Rand
- 51: Materialanprägung
- 53: umlaufende Nocken
- 61: Kupplungsbetätigungslager
- 67: Sicherungskappe
- 65: Stirnflanschstruktur
- 69: umgebördelter Rand
- 71: Fixierelement
- 73: Stützplatte
- 75: Fixiernase
- 77: Rastkralle
- 79: Sperrnase
- 81: Rastnase
- 83: partielle angeformte Nocken
- 101: Fixierelement
- 103: Rastnase
- 105: Sperrnase
- 107: Rastkralle
- 109: Stütznase
- 121: Fixierelement
- 123: Rastnase
- 125: Sperrnase
- 127: Rastkrallen
- 129: Stützzungen
- 141: Mutter
- 143: Sicherungskappe
- 145: Fixierelement
- 147: Stützschultereinrichtung
- 149: Außensechskant
- 151: Innenzwölfkant
- 153: Stirnflanschstruktur
- 155: Aufnahmeöffnung
- 157: Zweikantloch
- 159: Rastkrallen
- 161: Rastnasen
- 163: Sperrnasen

## Patentansprüche

1. Anbindestruktur (3) zur Anbindung eines Kupplungsbetätigungslagers (3, 61) an einer Stellstange (23), umfassend einen Lagerring (7, 9), eine an einem Lagerring (7, 9) angebundene Mutter (13, 141), die auf die Stellstange (23) aufgeschraubt werden kann und eine Sicherungskappe (25, 63, 143) zur Drehsicherung der Mutter (13, 141) gegenüber der Stellstange (23), wobei die Sicherungskappe (25, 63, 143) drehfest mit der Mutter (13, 141) verbunden ist, **dadurch gekennzeichnet, dass** ein separates Fixierelement (27, 71, 101, 121, 145) mit der Sicherungskappe (25, 63, 143) verbunden ist, wobei das Fixierelement (27, 71, 101, 121, 145) ein Mittel zur Axialabsicherung gegenüber der Stellstange (23) aufweist.

2. Anbindestruktur (3) nach Anspruch 1, **dadurch gekennzeichnet, dass** die Stellstange (23) ein Außengewinde (21) aufweist, und dass an dem Fixierelement (27, 71, 101, 121, 145) mindestens eine federelastische Rastnase (43, 81, 103, 123, 161) angeordnet ist, die zur Axialsicherung formschlüssig in die Flanken des Außengewindes (21) eingreift.

3. Anbindestruktur (3) nach Anspruch 1 oder 2, **dadurch gekennzeichnet, dass** das Fixierelement (27, 71, 101, 121, 145) wenigstens eine federelastische Sperrnase (41, 79, 105, 125, 163) umfasst, die sich zur Axialsicherung schräg entgegen einer Aufsteckrichtung (42) reibschlüssig an der Stellstange (23) abstützt.

4. Anbindestruktur (3) nach einem der vorhergehenden Ansprüche, **dadurch gekennzeichnet, dass** die Sicherungskappe (25, 63, 143) eine radial ausgerichtete Stirnflanschstruktur (33, 65, 153) aufweist, die von der Stellstange (23) drehfest durchsetzt ist.

5. Anbindestruktur (3) nach Anspruch 4, **dadurch gekennzeichnet, dass** die Stirnflanschstruktur (33, 65, 153) eine Aufnahmeöffnung (35, 155) umfasst, und dass das Fixierelement (27, 71, 101, 121, 145) wenigstens eine axial ausgerichtete Rastkralle (39, 77, 107, 127, 159) aufweist, über die es in der Aufnahmeöffnung (115) verrastet ist.

6. Anbindestruktur (3) nach Anspruch 4 oder 5, **dadurch gekennzeichnet, dass** das Fixierelement (27, 71, 101, 121, 145) auf die Stirnflanschstruktur (33, 65, 153) aufgesetzt ist und von der Stellstange (23) durchsetzt ist.

7. Anbindestruktur (3) nach einem der vorhergehenden Ansprüche, **dadurch gekennzeichnet, dass** die Mutter (13, 141) einen Außenmehrkant (29, 149) umfasst und dass die Sicherungskappe (25, 63, 143) einen Innenmehrkant (31, 151) umfasst, wobei die Kantenanzahl des Innenmehrkants (31, 151) ein ganzzahliges Vielfaches des Außenmehrkants (29, 149) ist.

8. Anbindestruktur (3) nach einem der vorhergehenden Ansprüche, **dadurch gekennzeichnet, dass** ein Sicherungselement zur axialen Abziehsicherung das Fixierelement (27, 71, 101, 121, 145) zusätzlich an der Sicherungskappe (25, 63, 143) fixiert.

9. Anbindestruktur (3) nach Anspruch 8, **dadurch gekennzeichnet, dass** das Sicherungselement als eine Stützplatte (45, 73) ausgebildet ist, die wenigstens eine sich in axialer Richtung erstreckende Fixiernase (31) aufweist, wobei die Fixiernase (31) in der Aufnahmeöffnung (35, 155) die Rastkralle (39, 77, 107, 127, 159) radial abstützt.

10. Anbindestruktur (3) nach Anspruch 9, **dadurch gekennzeichnet, dass**
die Stützplatte (45, 73) von der Stellstange (23) durchsetzt ist.

11. Anbindestruktur (3) nach einem der Ansprüche 9 oder 10, **dadurch gekennzeichnet, dass** die Stützplatte (45, 73) eine in den Innenmehrkant (31, 151) einsetzbare Außenstruktur aufweist.

12. Anbindestruktur (3) nach einem der Ansprüche 8 bis 11, **dadurch gekennzeichnet, dass** Sicherungselement aus einem Kunststoff besteht.

13. Anbindestruktur (3) nach Anspruch 8, **dadurch gekennzeichnet, dass** an der oder jeder Rastkralle (39, 77, 107, 127, 159) wenigstens eine Stütznase (109) radial in die Aufnahmeöffnung (35, 155) ausgestellt ist.

14. Anbindestruktur (3) nach Anspruch 8, **dadurch gekennzeichnet, dass** an der oder jeder Rastkralle (39, 77, 107, 127, 159) wenigstens eine Stützzunge (129) radial in die Aufnahmeöffnung (35, 155) ausgestellt ist.

15. Anbindestruktur (3) nach einem der vorhergehenden Ansprüche, **dadurch gekennzeichnet, dass** im Bereich der Stirnflanschstruktur (33, 65, 153) das Fixierelement (27, 71, 101, 121, 145) durch eine Materialanprägung (51) der Sicherungskappe (25, 63, 143) axial fixiert ist.

16. Anbindestruktur (3) nach einem der vorhergehenden Ansprüche, **dadurch gekennzeichnet, dass** im Bereich der Stirnflanschstruktur (33, 65, 153) das Fixierelement (27, 71, 101, 121, 145) durch einen umgebördelten Rand (69) an der Sicherungskappe (25, 63, 143) axial fixiert ist.

17. Anbindestruktur (3) nach einem der vorhergehenden Ansprüche, **dadurch gekennzeichnet, dass** das Sicherungskappe (25, 63, 143) aus einem Metall besteht.

18. Kupplungsbetätigungslager (1, 61) mit einem Wälzlager (5), und mit einem inneren Lagerring (7) und mit einem äußeren Lagerring (9), wobei zwischen diesen Lagerringen (7, 9) eine Anzahl von Wälzkörpern (11) angeordnet ist, und mit einer Stellstange (23), wobei der innere Lagerring (7) über eine Anbindestruktur (3) nach einem der vorhergehenden Ansprüche zur Anbindung des Wälzlagers (5) an der Stellstange (23) befestigt ist.

## Claims

1. Connecting structure (3) for connecting a clutch actuation bearing (3, 61) to an actuating rod (23), comprising a bearing ring (7, 9), a nut (13, 141) which is attached to a bearing ring (7, 9) and can be screwed onto the actuating rod (23), and a securing cap (25, 63, 143) for rotational securing of the nut (13, 141) with respect to the actuating rod (23), the securing cap (25, 63, 143) being connected fixedly to the nut (13, 141) so as to rotate with it, **characterized in that** a separate fixing element (27, 71, 101, 121, 145) is connected to the securing cap (25, 63, 143), the fixing element (27, 71, 101, 121, 145) having a means for axial securing with respect to the actuating rod (23).

2. Connecting structure (3) according to Claim 1, **characterized in that** the actuating rod (23) has an external thread (21), and **in that** at least one resilient latching lug (43, 81, 103, 123, 161) which engages for axial securing into the flanks of the external thread (21) in a positively locking manner is arranged on the fixing element (27, 71, 101, 121, 145).

3. Connecting structure (3) according to Claim 1 or 2, **characterized in that** the fixing element (27, 71, 101, 121, 145) comprises at least one resilient locking lug (41, 79, 105, 125, 163) which is supported frictionally on the actuating rod (23) for axial securing obliquely counter to a plug-on direction (42).

4. Connecting structure (3) according to one of the preceding claims, **characterized in that** the securing cap (25, 63, 143) has a radially oriented end flange structure (33, 65, 153) which is penetrated fixedly by the actuating rod (23) so as to rotate with it.

5. Connecting structure (3) according to Claim 4, **characterized in that** the end flange structure (33, 65, 153) comprises a receiving opening (35, 155), and **in that** the fixing element (27, 71, 101, 121, 145) has at least one axially oriented latching claw (39, 77, 107, 127, 159), via which it is latched in the receiving opening (115).

6. Connecting structure (3) according to Claim 4 or 5, **characterized in that** the fixing element (27, 71, 101, 121, 145) is placed onto the end flange structure (33, 65, 153) and is penetrated by the actuating rod (23).

7. Connecting structure (3) according to one of the preceding claims, **characterized in that** the nut (13, 141) comprises an external polygon (29, 149), and **in that** the securing cap (25, 63, 143) comprises an internal polygon (31, 151), the number of edges of the internal polygon (31, 151) being an integral multiple of the external polygon (29, 149).

8. Connecting structure (3) according to one of the preceding claims, **characterized in that** a securing element additionally fixes the fixing element (27, 71, 101, 121, 145) on the securing cap (25, 63, 143), for axial securing against being pulled off.

9. Connecting structure (3) according to Claim 8, **characterized in that** the securing element is configured as a supporting plate (45, 73) which has at least one fixing lug (31) which extends in the axial direction, the fixing lug (31) supporting the latching claw (39, 77, 107, 127, 159) radially in the receiving opening (35, 155).

10. Connecting structure (3) according to Claim 9, **characterized in that** the supporting plate (45, 73) is penetrated by the actuating rod (23).

11. Connecting structure (3) according to either of Claims 9 and 10, **characterized in that** the supporting plate (45, 73) has an external structure which can be inserted into the internal polygon (31, 151).

12. Connecting structure (3) according to one of Claims 8 to 11, **characterized in that** the securing element is composed of a plastic.

13. Connecting structure (3) according to Claim 8, **characterized in that**, on the or each latching claw (39, 77, 107, 127, 159), at least one supporting lug (109) is deployed radially into the receiving opening (35, 155).

14. Connecting structure (3) according to Claim 8, **characterized in that**, on the or each latching claw (39, 77, 107, 127, 159), at least one supporting tongue (129) is deployed radially into the receiving opening (35, 155).

15. Connecting structure (3) according to one of the preceding claims, **characterized in that**, in the region of the end flange structure (33, 65, 153), the fixing element (27, 71, 101, 121, 145) is fixed axially by a material indentation (51) of the securing cap (25, 63, 143).

16. Connecting structure (3) according to one of the preceding claims, **characterized in that**, in the region of the end flange structure (33, 65, 153), the fixing element (27, 71, 101, 121, 145) is fixed axially by a flanged-over edge (69) on the securing cap (25, 63, 143).

17. Connecting structure (3) according to one of the preceding claims, **characterized in that** the securing cap (25, 63, 143) is composed of a metal.

18. Clutch actuation bearing (1, 61) having an anti-friction bearing (5), and having an inner bearing ring (7) and having an outer bearing ring (9), a number of rolling bodies (11) being arranged between the said bearing rings (7, 9), and having an actuating rod (23), the inner bearing ring (7) being fastened to the actuating rod (23) via a connecting structure (3) according to one of the preceding claims for connection of the anti-friction bearing (5).

## Revendications

1. Structure de connexion (3) pour la connexion d'une butée d'actionnement d'embrayage (1, 61) à une tige de commande (23), comprenant une bague de palier (7, 9), un écrou (13, 141) connecté à une bague de palier (7, 9), lequel peut être vissé à la tige de commande (23), et un capuchon de fixation (25, 63, 143) pour la fixation en rotation de l'écrou (13, 141) par rapport à la tige de commande (23), le capuchon de fixation (25, 63, 143) étant connecté de manière solidaire en rotation à l'écrou (13, 141), **caractérisée en ce qu'**un élément de fixation séparé (27, 71, 101, 121, 145) est connecté au capuchon de fixation (25, 63, 143), l'élément de fixation (27, 71, 101, 121, 145) présentant un moyen pour la fixation axiale par rapport à la tige de commande (23).

2. Structure de connexion (3) selon la revendication 1, **caractérisée en ce que** la tige de commande (23) présente un filetage extérieur (21) et **en ce qu'**au moins un ergot d'encliquetage (43, 81, 103, 123, 161) élastique à ressort est disposé sur l'élément de fixation (27, 71, 101, 121, 145), lequel ergot d'encliquetage vient en prise pour la fixation axiale par engagement par correspondance géométrique dans les flancs du filetage extérieur (21).

3. Structure de connexion (3) selon la revendication 1 ou 2, **caractérisée en ce que** l'élément de fixation (27, 71, 101, 121, 145) comprend au moins un ergot de blocage (41, 79, 105, 125, 163) élastique à ressort qui s'appuie pour la fixation axiale obliquement à l'encontre d'une direction d'enfichage (42) par engagement par friction sur la tige de commande (23).

4. Structure de connexion (3) selon l'une quelconque des revendications précédentes, **caractérisée en ce que** le capuchon de fixation (25, 63, 143) présente une structure de bride frontale (33, 65, 153) orientée radialement, qui est traversée de manière solidaire en rotation par la tige de commande (23).

5. Structure de connexion (3) selon la revendication 4, **caractérisée en ce que** la structure de bride frontale (33, 65, 153) comprend une ouverture de réception (35, 155) et **en ce que** l'élément de fixation (27, 71, 101, 121, 145) présente au moins une griffe d'encliquetage orientée axialement (39, 77, 107, 127, 159), par le biais de laquelle il est encliqueté dans l'ouverture de réception (115).

6. Structure de connexion (3) selon la revendication 4 ou 5, **caractérisée en ce que** l'élément de fixation (27, 71, 101, 121, 145) est posé sur la structure de bride frontale (33, 65, 153) et est traversé par la tige de commande (23).

7. Structure de connexion (3) selon l'une quelconque des revendications précédentes, **caractérisée en ce que** l'écrou (13, 141) comprend un contour extérieur polygonal (29, 149) et **en ce que** le capuchon de fixation (25, 63, 143) comprend un contour intérieur polygonal (31, 151), le nombre de côtés du contour intérieur polygonal (31,151) étant un multiple entier du contour extérieur polygonal (29, 149).

8. Structure de connexion (3) selon l'une quelconque des revendications précédentes, **caractérisée en ce qu'**un élément de fixation pour la fixation axiale contre le retrait fixe en outre l'élément de fixation (27, 71, 101, 121, 145) sur le capuchon de fixation (25, 63, 143).

9. Structure de connexion (3) selon la revendication 8, **caractérisée en ce que** l'élément de fixation est réalisé sous forme de plaque de support (45, 73), qui présente au moins un ergot de fixation (31) s'étendant dans la direction axiale, l'ergot de fixation (31) supportant radialement la griffe d'encliquetage (39, 77, 107, 127, 159) dans l'ouverture de réception (35, 155).

10. Structure de connexion (3) selon la revendication 9, **caractérisée en ce que** la plaque de support (45, 73) est traversée par la tige de commande (23).

11. Structure de connexion (3) selon l'une quelconque des revendications 9 ou 10, **caractérisée en ce que** la plaque de support (45, 73) présente une structure extérieure pouvant être insérée dans le contour polygonal intérieur (31, 151).

12. Structure de connexion (3) selon l'une quelconque des revendications 8 à 11, **caractérisée en ce que** l'élément de fixation se compose de plastique.

13. Structure de connexion (3) selon la revendication 8, **caractérisée en ce qu'**au moins un ergot de support (109) sur la ou chaque griffe d'encliquetage (39, 77, 107, 127, 159) fait saillie radialement dans l'ouverture de réception (35, 155).

14. Structure de connexion (3) selon la revendication 8, **caractérisée en ce qu'**au moins une langue de support (129) sur la ou chaque griffe d'encliquetage (39, 77, 107, 127, 159) fait saillie radialement dans l'ouverture de réception (35, 155).

15. Structure de connexion (3) selon l'une quelconque des revendications précédentes, **caractérisée en ce que** l'élément de fixation (27, 71, 101, 121, 145) est fixé axialement dans la région de la structure de bride frontale (33, 65, 153) par un gaufrage de matériau (51) du capuchon de fixation (25, 63, 143).

16. Structure de connexion (3) selon l'une quelconque des revendications précédentes, **caractérisée en ce que** dans la région de la structure de bride frontale (33, 65, 153), l'élément de fixation (27, 71, 101, 121, 145) est fixé axialement par un bord rabattu (69) au niveau du capuchon de fixation (25, 63, 143).

17. Structure de connexion (3) selon l'une quelconque des revendications précédentes, **caractérisée en ce que** le capuchon de fixation (25, 63, 143) se compose de métal.

18. Butée d'actionnement d'embrayage (1, 61) comprenant un palier à roulement (5), et une bague de palier interne (7) et une bague de palier externe (9), entre ces bagues de palier (7, 9) étant disposée une pluralité de corps de roulement (11), et comprenant une tige de commande (23), la bague de palier interne (7) étant fixée par une structure de connexion (3) selon l'une quelconque des revendications précédentes pour la connexion du palier à roulement (5) à la tige de commande (23).
